# EUROPEAN PATENT SPECIFICATION

(11) **EP 2 277 088 B1**
(45) Date of publication and mention of the grant of the patent: **26.10.2011**
(21) Application number: 09738372.3
(22) Date of filing: 21.04.2009
(51) Int. Cl.: G05D 7/01, F16K 47/12, F16L 55/027

(54) **FLOW RESTRICTION MEMBER**
FLUSSBESCHRÄNKUNGSELEMENT
ELÉMENT DE RESTRICTION D ÉCOULEMENT

(30) Priority: 28.04.2008 GB 0807715
(43) Date of publication of application: 26.01.2011
(73) Proprietor: Wabco Automotive UK Limited, Leeds LS27 0HQ (GB)
(72) Inventor: HEAPS, David, Morley Leeds LS27 0HQ (GB); RUDDOCK, Paul, Morley Leeds LS27 0HQ (GB)
(74) Representative: Gray, James
(86) International application number: PCT/GB2009/001013
(87) International publication number: WO 2009/133342

(56) References cited:
- EP-A- 0 255 312
- GB-A- 738 354
- GB-A- 1 457 625
- GB-A- 2 371 578
- US-A- 4 418 723

## Description

The present invention relates to a member which is insertable into a flow passage to restrict the flow of fluid through the passage. In particular, the present invention relates to a member which is insertable into an oil flow passage of an a vacuum pump to restrict the flow of oil therethrough.

An automotive vacuum pump is typically supplied with oil from the engine lubrication system. The oil is required to both lubricate movable components of the pump and to assist with sealing of pump components with respect to one another. There is often a requirement that the flow of oil to the pump be limited so as not to exceed a defined flow rate. Limiting of the flow ensures that sufficient oil is supplied to the pump without affecting the circulation of oil around the remainder of the engine lubrication system. The required limiting of the flow rate of oil to the pump may be achieved by providing a restriction in the oil supply line to the pump. The restriction may be provided by reducing the diameter of an oil conduit. A problem with this solution is that the bore may require to be narrowed to such an extent that, in certain circumstances, the flow of oil may be overly restricted and the pump starved of oil. Oil starvation may, for example, occur when the oil is cold and hence more viscous than when hot.

An alternative method for providing the restriction involves placing an obstruction in the oil conduit which partially occludes the conduit. Taking the example of a tubular conduit, the obstruction may comprise a cylindrical member having an outer diameter which is less than the conduit diameter. The cylindrical member is positioned within the conduit such that an annular flow path is defined in the conduit around the member. A problem with this solution is that the cross-sectional dimensions of the annular flow path may be so small as to be susceptible to blockage by particles in the oil.

GB 2371578 discloses a flow control device having ports which can be selectively opened and closed by sliding gate plugs.

According to a first embodiment of the present invention there is provided a flow restriction member, the member comprising a core having a cross sectional area which is less than that of a conduit and a rib extending around the core in a substantially helical manner, the height of the rib being such that, in use, the rib contacts the wall of a conduit and defines a substantially helical flow path between the core and the wall of the conduit, **characterised in that** the member further comprises an end portion, including a longitudinal rib.

The present invention thus provides a member which is insertable into a conduit to restrict the flow of fluid therethrough. For a conduit of a given cross-sectional dimensions the degree by which the fluid flow is restricted is determined by the cross-sectional dimensions and path length of the helical flow path. From a manufacturing perspective, the present invention permits the relatively straightforward provision of a flow restriction within the casing of a vacuum pump. An oversize oil conduit may be formed in the casing into which the member is inserted in order to define the appropriate restriction.

The core may be substantially cylindrical, with uniform cross-sectional dimensions along its length about a central, longitudinal axis.

In one embodiment the helical rib may extend around the body for more than 360°. For example, the may rib extend around the body for about 720°.

The rib may comprise opposed side walls, and a curved top wall, the top wall being concentric with respect to the longitudinal axis of the body.

The member may further comprise at least one end portion, the end portion including at least one longitudinal rib. The end portion may be provided with a plurality of ribs. In one embodiment the end portion may include at least three longitudinal ribs. Alternatively, the end portion may include four longitudinal ribs. The longitudinal ribs may be spaced equidistantly about the end portion.

The end portion is provided with an end face, and the or each longitudinal rib may taper in the direction of the end face. In such an embodiment the or each longitudinal rib may taper for approximately one third of its overall length. The or each longitudinal rib may include opposed and substantially parallel side walls and an outwardly curved top wall, the curve of the top wall being concentric with respect the longitudinal axis of the body.

The flow restriction member may be made from plastics material.

According to a further aspect of the present invention there is provided a method of providing a flow restriction in a fluid conduit of a vacuum pump, the method comprising the steps of:
providing a fluid conduit;
providing member comprising a core having a cross sectional area which is less than that of the conduit, a rib extending around the core in a substantially helical manner; and
inserting the member into the conduit such that said helical rib contacts a wall of the conduit to define a substantially helical flow path between the member and the wall of the conduit, **characterised in that** the member (10) includes an end portion having a longitudinal rib.

An embodiment of the present invention will now be described with reference to the accompanying drawings in which:

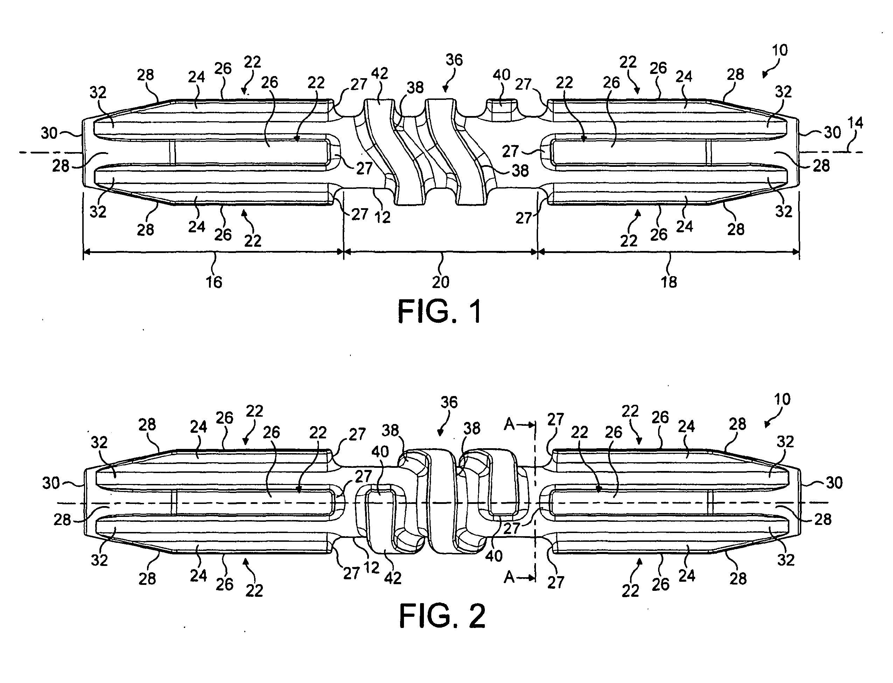

Figure 1 shows a side view of an insertable member according to the present invention;
Figure 2 shows a further side view of the insertable member of figure 1;

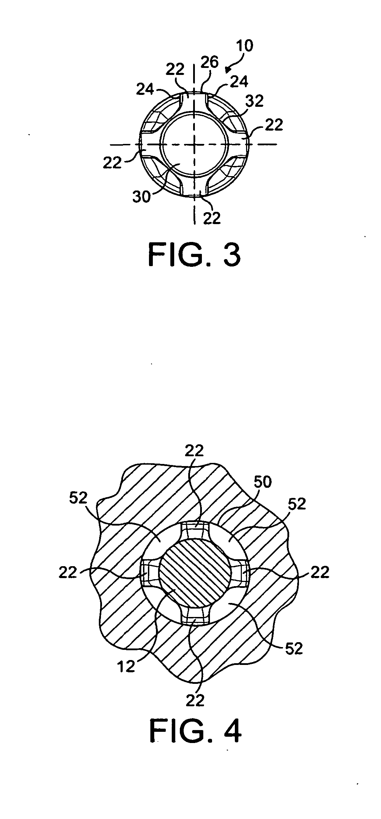

Figure 3 shows an end view of the insertable member; and
Figure 4 shows the cross-sectional view indicated by arrows A-A in figure 2.

Referring to the figures there is shown an insertable flow restriction member generally designated 10. In use, the flow restriction member is insertable into a tubular liquid or fluid conduit in order to create a restriction to the flow of liquid or fluid through the conduit. The member 10 is of unitary construction and may be formed from a plastics material by an injection moulding process. The member 10 includes a substantially cylindrical core 12 of uniform cross-sectional dimensions along its length which is provided about a central, longitudinal axis 14. Extending from the core 12 are a plurality of projections, the function and configuration of which are described in greater detail below. The member 10 may be considered to comprise opposed end portions 16,18 separated by a mid portion 20.

Each end portion 16,18 includes a plurality of longitudinal ribs 22. In the embodiment shown, each end portion 16,18 is provided with four ribs 22. In alternative embodiments each end portion 16,18 may be provided with a greater or lesser number of ribs. The number of ribs 22 for a given member 10 will depend upon such factors as, for example, the viscosity of the liquid which is intended to flow around the member 10, and the diameter of the conduit into which the member 10 is to be inserted. Each end portion 16,18 may have the same number of ribs 22. Alternatively, each end portion 16,18 may have a different number of ribs 22. In the embodiment shown, each rib 22 extends outwardly from the core 12 in a direction substantially perpendicular to the longitudinal axis 14, and along the core 12 in a direction substantially parallel to the longitudinal axis 14. Each rib 22 includes opposed and substantially parallel side walls 24 which merge smoothly into the core 12, and an outwardly curved top wall 26. A portion 32 of the core 12 is exposed between adjacent ribs 22. The curve of the top wall 26 is concentric with respect the longitudinal axis 14 of the core 12. Each rib 22 further includes an end wall 27 which is proximal to the mid portion 10 of the member 10. The ribs 22 are spaced equidistantly about the core 12. The end 28 of each rib 22 which is distal to the mid portion 20 of the member 10 is tapered in the direction of the respective end of the member 10. In the embodiment shown, each rib 22 tapers into the core 12 a short distance before each end face 30 of the core 12. Each rib 22 is tapered for approximately one third of its overall length.

The mid portion 20 includes a rib 36 which extends around the core 12 in a substantially helical manner. The helical rib 36 comprises opposed side walls 38, end walls 40 and a top wall 42. The end and side walls 38,40 merge smoothly into the core 12. The top wall 42 is concentric with respect to the longitudinal axis 14 of the core 12. In the embodiment shown the helical rib 36 extends around the core 12 for two full revolutions or 720 degrees. The helical rib 36 and the exposed portion 44 of the core 12 define between them a substantially helical flow path 46. The helical rib 36 is positioned about the core 12 of the mid portion 20 such that it is spaced from the end walls 27 of the ribs 22. There is thus provided an exposed region 48 of the core 12 to either side of the helical rib 36. The helical rib 36 projects from the core 12 at a substantially constant height along its length around the core 12. The height of the helical rib 36 is substantially the same as that of the non-tapered portions of the longitudinal ribs 22.

In use, the member 10 is inserted into a tubular conduit 50 so as to create a flow restriction. The tapered ends 28 of the longitudinal ribs 22 assist with the location of the member 10 in the conduit 50 during the introduction of the member 10. The outer diameter of the member 10, as defined by the top walls 26, 42 of the longitudinal and helical ribs 22, 36 is slightly greater than the inside diameter of the conduit 50. As such, the member 10 is press fit to the conduit 50. Once inserted, the member 10 is retained in the conduit 50 by the frictional engagement of the rib top walls 26,42 with the conduit 50.

Once in the member 10 has been placed in the conduit 50, a number of liquid flow passages are defined between the member 10 and the conduit. Firstly, a substantially straight rib flow passage 52 is defined between the side walls 24 of adjacent ribs 22, the exposed core portion 32 and the conduit 50. In the embodiment shown, each end portion 16,18 of the member 10 is provided with four such rib flow passages 52. A helical rib flow passage is defined about the mid portion 20 of the member 10. The helical flow passage is defined between side walls 38 of the helical rib 36, the exposed portion of core 12 around which the helical rib 36 winds, and the conduit 50. The straight rib flow passages 52 and the helical rib flow passage are separated from one another by a substantially annular chamber defined between the exposed region 48 of the core 12 between the rib end walls 27 and the helical rib 36, and the conduit 50.

Liquid, such as oil, encountering the member 10 within a conduit 50 is first split between the four rib flow passages 52. As the combined cross-sectional area of the four passages 52 is less than that of the cross-sectional area of the unobstructed conduit 50, then the flow of liquid is initially restricted by entry into the rib flow passages 52. Liquid entering the rib flow passages 52 subsequently enters the annular chamber situated between the rib end walls 27 and the helical rib 36. This liquid then enters the helical flow passage defined between the helical rib 36, core 12 and the conduit 50 and then travels in a helical path around the core 12 to the second annular chamber. The cross-sectional area of the helical flow passage is less than the combined cross-sectional area of the rib flow passages 52. The movement of the liquid around this helical path thus provides a further restriction to the flow of liquid through the conduit 50. Upon exiting the helical flow passage, the liquid passes into the second annular chamber before passing through the remaining four rib flow passages 52. It will be understood that the symmetrical nature of the member 10 ensures that the flow of liquid is restricted by the member 10 irrespective as to which direction flow encounters the member 10.

It will be appreciated that a member 10 according to the present invention can be constructed and configured so as to meet desired flow restriction requirements and performance. For example, the diameter of the core 12 may be varied, as may the number, spacing, thickness and length of the longitudinal ribs 22. Additionally, the dimensions of the helical rib 36, and hence the helical flow path may also be varied. Depending upon the required flow restriction properties, the helical rib 36 may wind around the core 12 for less than 720 degrees or more than 720 degrees.

In the embodiment shown the member 10 is double ended and as such may be inserted either way into the conduit. It will be appreciated that for alternative installations, the member 10 may be handed or otherwise configured so as to be insertable into the conduit in a single direction. In the embodiment shown, both of the end portions 16,18 are substantially equal in length and rib configuration. In an alternative embodiment, the lengths and rib configurations of the end portions 16,18 may be different. In yet a further embodiment only one end portion of the member may be ribbed.

## Claims

1. A flow restriction member (10), the member (10) comprising a core (12) having a cross sectional area which is less than that of a conduit and a rib (36) extending around the core (12) in a substantially helical manner, the height of the rib (36) being such that, in use, the rib (36) contacts the wall of a conduit and defines a substantially helical flow path (46) between the core (12) and the wall of the conduit, **characterised in that** the member (10) further comprises an end portion (16,18), including a longitudinal rib (22).

2. A flow restriction member (10) as claimed in claim 1, wherein the core (12) is substantially cylindrical, with uniform cross-sectional dimensions along its length about a central, longitudinal axis (14).

3. A flow restriction member (10) as claimed in claim 1 or claim 2, wherein the rib (36) extends around the core (12) for more than 360°.

4. A flow restriction member (10) as claimed in claim 1, claim 2, or claim 3, wherein the rib (35) extends around the core (12) for about 720°.

5. A flow restriction member (10) as claimed in any preceding claim, wherein the rib (36) comprises opposed side walls (38), and a top wall (42), the top wall (42) being concentric with respect to the longitudinal axis (14) of the core (12).

6. A flow restriction member (10) as claimed in any preceding claim wherein the end portion (16,18) includes a plurality of longitudinal ribs (22).

7. A flow restriction member (10) as claimed in claim 6, wherein the end portion (16,18) includes at least three longitudinal ribs (22).

8. A flow restriction member (10) as claimed in claim 6 or claim 7, wherein the end portion (16,18) includes four longitudinal ribs (22).

9. A flow restriction member (10) as claimed in claim 6, claim 7, or claim 8, wherein the longitudinal ribs (22) are spaced equidistantly about the core (12).

10. A flow restriction member (10) as claimed in any of claims 6 to 9, wherein the end portion (16,18) has an end face (30), and each longitudinal rib (22) tapers in the direction of the end face (30).

11. A flow restriction member (10) as claimed in claim 10, wherein each longitudinal rib (22) is tapered for approximately one third of its overall length.

12. A flow restriction member (10) as claimed in any of claims 6 to 11, wherein each longitudinal rib (22) includes opposed and substantially parallel side walls (24) and an outwardly curved top wall (26), the curve of the top wall (26) being concentric with respect the longitudinal axis (14) of the core (12).

13. A flow restriction member (10) as claimed in any preceding claim, wherein the member (10) is made from plastics material.

14. A method of providing a flow restriction in a fluid conduit (50) of a vacuum pump, the method comprising the steps of:
providing a fluid conduit (50);
providing member (10) comprising a core (12) having a cross sectional area which is less than that of the conduit (52), a rib (36) extending around the core (12) in a substantially helical manner; and
inserting the member (10) into the conduit (50) such that said helical rib (36) contacts a wall of the conduit (50) to define a substantially helical flow path between the member (10) and the wall of the conduit, **characterised in that** the member (10) includes an end portion (16,18) having a longitudinal rib (22).

## Patentansprüche

1. Durchflussbegrenzungselement (10), wobei das Element (10) einen Kern (12) mit einer Querschnittsfläche aufweist, die kleiner als diejenige einer Leitung ist, und eine Rippe (36), die sich im Wesentlichen spiralförmig um den Kern (12) erstreckt, wobei die Höhe der Rippe (36) derart ist, dass die Rippe (36) bei Verwendung die Wand einer Leitung berührt und einen im Wesentlichen spiralförmigen Durchflussweg (46) zwischen dem Kern (12) und der Wand der Leitung festlegt, **dadurch gekennzeichnet, dass** das Element (10) weiterhin einen Endabschnitt (16,18) mit einer Längsrippe (22) aufweist.

2. Durchflussbegrenzungselement (10) nach Anspruch 1, wobei der Kern (12) im Wesentlichen zylindrisch ist, mit gleichförmigen Querschnittsabmessungen entlang seiner Länge um eine zentrale Längsachse (14).

3. Durchflussbegrenzungselement (10) nach Anspruch 1 oder Anspruch 2, wobei sich die Rippe (36) um mehr als 360° um den Kern (12) erstreckt.

4. Durchflussbegrenzungselement (10) nach Anspruch 1, Anspruch 2 oder Anspruch 3, wobei sich die Rippe (35) um mehr als 720° um den Kern (12) erstreckt.

5. Durchflussbegrenzungselement (10) nach einem der vorhergehenden Ansprüche, wobei die Rippe (36) entgegengesetzte Seitenwände (38) aufweist, wobei eine obere Wand (42) im Verhältnis zu der Längsachse (14) des Kernes (12) konzentrisch ist.

6. Durchflussbegrenzungselement (10) nach einem der vorhergehenden Ansprüche, wobei der Endabschnitt (16,18) eine Vielzahl von Längsrippen (22) aufweist.

7. Durchflussbegrenzungselement (10) nach Anspruch 6, wobei der Endabschnitt (16,18) mindestens drei Längsrippen (22) aufweist.

8. Durchflussbegrenzungselement (10) nach Anspruch 6 oder Anspruch 7, wobei der Endabschnitt (16,18) vier Längsrippen (22) aufweist.

9. Durchflussbegrenzungselement (10) nach Anspruch 6, Anspruch 7 oder Anspruch 8, wobei die Längsrippen (22) um den Kern (12) herum gleichweit beabstandet sind.

10. Durchflussbegrenzungselement (10) nach einem der Ansprüche 6 bis 9, wobei der Endabschnitt (16,18) eine Endfläche (30) aufweist, und sich jede Längsrippe (22) in Richtung der Endfläche (30) verjüngt.

11. Durchflussbegrenzungselement (10) nach Anspruch 10, wobei sich jede Längsrippe (22) auf annähernd einem Drittel ihrer Gesamtlänge verjüngt.

12. Durchflussbegrenzungselement (10) nach einem der Ansprüche 6 bis 11, wobei jede Längsrippe (22) einander gegenüberliegende und im Wesentlichen parallele Seitenwände (24) und eine nach außen gekrümmte obere Wand (26) aufweist, wobei die Krümmung der oberen Wand (26) im Verhältnis zu der Längsachse (14) des Kernes (12) konzentrisch ist.

13. Durchflussbegrenzungselement (10) nach einem der vorhergehenden Ansprüche, wobei das Element (10) aus einem Kunststoffmaterial hergestellt ist.

14. Verfahren zur Bereitstellung einer Durchflussbegrenzung in einer Fluidleitung (50) einer Unterdruckpumpe, wobei das Verfahren die folgenden Schritte umfasst:
Bereitstellung einer Fluidleitung (50);
Bereitstellung des Elementes (10) mit einem Kern (12) mit einer Querschnittsfläche, die kleiner als diejenige der Leitung (52) ist, einer Rippe (36), die sich im Wesentlichen spiralförmig um den Kern (12) erstreckt; und
Einführen des Elementes (10) in die Leitung (50) derart, dass die spiralförmige Rippe (36) eine Wand der Leitung (50) berührt, um einen im Wesentlichen spiralförmigen Durchflussweg zwischen dem Element (10) und der Wand der Leitung festzulegen, **dadurch gekennzeichnet, dass** das Element (10) einen Endabschnitt (16,18) mit einer Längsrippe (22) aufweist.

## Revendications

1. Elément de restriction d'écoulement (10), l'élément (10) comprenant un noyau (12) dont la surface de la section transversale est plus petite que celle d'un conduit, et une nervure (36) qui s'étend autour du noyau (12) d'une façon sensiblement hélicoïdale, la hauteur de la nervure (36) étant telle que, lors de l'utilisation, la nervure (36) entre en contact avec la paroi d'un conduit et définisse un chemin d'écoulement sensiblement hélicoïdal (46) entre le noyau (12) et la paroi du conduit, **caractérisé en ce que** l'élément (10) comprend en outre une partie d'extrémité (16, 18) qui comporte une nervure longitudinale (22).

2. Elément de restriction d'écoulement (10) selon la revendication 1, dans lequel le noyau (12) est sensiblement cylindrique, avec des dimensions de section transversale uniformes le long de sa longueur autour d'un axe longitudinal central (14).

3. Elément de restriction d'écoulement (10) selon la revendication 1 ou la revendication 2, dans lequel la nervure (36) s'étend autour du noyau (12) sur plus de 360°.

4. Elément de restriction d'écoulement (10) selon la revendication 1, la revendication 2 ou la revendication 3, dans lequel la nervure (35) s'étend autour du noyau (12) sur environ 720°.

5. Elément de restriction d'écoulement (10) selon l'une quelconque des revendications précédentes, dans lequel la nervure (36) comprend des parois latérales opposées (38), et une paroi supérieure (42), la paroi supérieure (42) étant concentrique par rapport à l'axe longitudinal (14) du noyau (12).

6. Elément de restriction d'écoulement (10) selon l'une quelconque des revendications précédentes, dans lequel la partie d'extrémité (16, 18) comporte une pluralité de nervures longitudinales (22).

7. Elément de restriction d'écoulement (10) selon la revendication 6, dans lequel la partie d'extrémité (16, 18) comporte au moins trois nervures longitudinales (22).

8. Elément de restriction d'écoulement (10) selon la revendication 6 ou la revendication 7, dans lequel la partie d'extrémité (16, 18) comporte quatre nervures longitudinales (22).

9. Elément de restriction d'écoulement (10) selon la revendication 6, la revendication 7 ou la revendication 8, dans lequel les nervures longitudinales (22) sont espacées de façon équidistante autour du noyau (12).

10. Elément de restriction d'écoulement (10) selon l'une quelconque des revendications 6 à 9, dans lequel la partie d'extrémité (16, 18) présente une face d'extrémité (30), et chaque nervure longitudinale (22) s'amincit dans la direction de la face d'extrémité (30).

11. Elément de restriction d'écoulement (10) selon la revendication 10, dans lequel chaque nervure longitudinale (22) est conique sur approximativement un tiers de sa longueur totale.

12. Elément de restriction d'écoulement (10) selon l'une quelconque des revendications 6 à 11, dans lequel chaque nervure longitudinale (22) présente des parois latérales opposées et sensiblement parallèles (24) et une paroi supérieure incurvée vers l'extérieur (26), la courbe de la paroi supérieure (26) étant concentrique par rapport à l'axe longitudinal (14) du noyau (12).

13. Elément de restriction d'écoulement (10) selon l'une quelconque des revendications précédentes, dans lequel l'élément (10) est constitué d'une matière plastique.

14. Procédé de formation d'une restriction d'écoulement dans un conduit de fluide (50) d'une pompe à vide, le procédé comprenant les étapes suivantes:
prévoir un conduit de fluide (50);
prévoir un élément (10) comprenant un noyau (12) dont la surface de la section transversale est plus petite que celle du conduit (52), une nervure (36) s'étendant autour du noyau (12) d'une façon sensiblement hélicoïdale, et
insérer l'élément (10) dans le conduit (50) de telle sorte que la nervure hélicoïdale (36) entre en contact avec une paroi du conduit (50) de manière à définir un chemin d'écoulement sensiblement hélicoïdal entre l'élément (10) et la paroi du conduit, **caractérisé en ce que** l'élément (10) comprend une partie d'extrémité (16, 18) qui comporte une nervure longitudinale (22).
